Europäisches Patentamt

European Patent Office

Office européen des brevets

(19)

(11) Numéro de publication: **0 266 292 B1**

## FASCICULE DE BREVET EUROPEEN

(12)

(45) Date de publication de fascicule du brevet:
24.07.91

(51) Int. Cl.⁵: **A01B 19/06**

(21) Numéro de dépôt: 87440066.6

(22) Date de dépôt: **21.10.87**

(54) **Machine de travail du sol.**

(30) Priorité: **22.10.86 FR 8614767**

(43) Date de publication de la demande:
**04.05.88 Bulletin 88/18**

(45) Mention de la délivrance du brevet:
**24.07.91 Bulletin 91/30**

(84) Etats contractants désignés:
**AT BE CH DE ES GB IT LI NL**

(56) Documents cités:
**EP-A- 0 015 881**
**CH-A- 499 251**

(73) Titulaire: **KUHN S.A.**
**4, Impasse des Fabriques**
**F-67700 Saverne(FR)**

(72) Inventeur: **Oberle, Edmond**
**11, rue de Thal**
**Haegen F-67700 Saverne(FR)**
Inventeur: **Klein, Jean**
**19, rue du Herrenstein**
**Dossenheim Sur Zinsel F-67330**
**Bouxwiller(FR)**

## Description

L'invention décrite ci-après concerne une machine de travail du sol comportant d'une part un châssis muni d'un dispositif d'attelage à un véhicule moteur, châssis auquel est liée par une pluralité de bras oscillants au moins une rangée d'au moins deux barres munies d'outils, lesdites barres étant au moins sensiblement alignées et à mouvements opposés, et d'autre part un mécanisme de transformation du mouvement rotatif reçu d'une source motrice en un mouvement de va-et-vient transversal à la direction d'avance au travail, comportant un dispositif à bielles-excentriques, chaque bielle servant à transmettre le mouvement de va-et-vient à la barre correspondante à laquelle elle est liée directement ou indirectement par une de ses extrémités.

Une telle machine de travail du sol est décrite dans EP-A-0 015 881. Celle-ci comporte deux rangées de deux barres chacune. Les barres d'une même rangée sont alignées dans une direction transversale à la direction d'avance au travail et sont animées de mouvements opposés grâce à un mécanisme très intéressant, transformant un mouvement rotatif en un mouvement de va-et-vient transversal à la direction d'avance au travail. Chaque barre est liée au châssis au moyen de deux bras oscillants. Dans cette machine connue, chaque barre est formée par un tube carré dont l'extrémité est coupée perpendiculairement à l'axe longitudinal dudit tube. Les extrémités présentent donc une surface plane relativement grande, de sorte que, lorsque deux barres adjacentes sont dans la phase de rapprochement de leur mouvement, des objets durs tels que des pierres peuvent se coincer entre ces deux barres et bloquer leur mouvement avec le risque d'endommager gravement le mécanisme d'entraînement de celles-ci.

Dans la CH-A-499 251 est décrite une autre machine de travail du sol comportant également une rangée de deux barres munies d'outils. Ces deux barres sont alignées dans une direction transversale à la direction d'avance au travail et sont animées de mouvements opposés grâce à un mécanisme transformant un mouvement rotatif en un mouvement de va-et-vient transversal à la direction d'avance au travail. Chaque barre est liée au châssis au moyen de deux bras oscillants. Dans cette machine connue, l'extrémité de chaque barre est également coupée perpendiculairement à l'axe longitudinal de celle-ci, de sorte que cette machine possède les mêmes inconvénients que celle décrite plus haut.

Le but de la présente invention est de modifier ces machines de travail du sol connues pour solutionner ce problème.

A cet effet, la machine de travail du sol telle que décrite dans le préambule de la revendication 1 est caractérisée par le fait que les deux extrémités de deux barres adjacentes d'une même rangée, en regard l'une de l'autre, présentent chacune un sommet, le sommet de l'une des barres étant dirigé vers l'extrémité de l'autre barre.

Grâce à cet agencement, les objets durs qui se trouvent entre deux barres adjacentes, lors de leur phase de rapprochement, sont repoussés. On évite ainsi que ces objets durs ne se coincent entre ces barres et ne bloquent leur mouvement.

Selon une caractéristique supplémentaire de l'invention, le sommet de l'une des barres est dirigé vers le sommet de l'autre barre.

Selon une autre caractéristique supplémentaire de l'invention, ladite extrémité d'une barre présente une forme conique.

D'autres caractéristiques de l'invention sont contenues dans la description ci-dessous d'un exemple non-limitatif de réalisation de l'invention, se référant au dessin annexé sur lequel :
- La figure 1 représente une vue de derrière d'une machine de travail du sol selon l'invention, à laquelle on a enlevé les rouleaux avant et arrière pour une meilleure clarté,
- La figure 2 représente une vue de dessus de la machine de travail du sol de la figure 1 avec une vision partielle du capotage.
- La figure 3 représente une vue de côté de la machine des figures 1 et 2: équipée en sus d'un attelage arrière,
- La figure 4 représente une vue de côté d'une machine de travail du sol selon l'invention également équipée d'un attelage arrière,
- La figure 5 représente à une échelle plus grande une vue de côté partielle, en coupe suivant le plan V - V de la figure 2, de deux bras oscillants montés côte à côte, et
- La figure 6 représente une vue de face partielle et en coupe suivant le plan VI - VI de la figure 3, du dispositif à bielles-excentriques et de l'extrémité respective de deux barres adjointes.

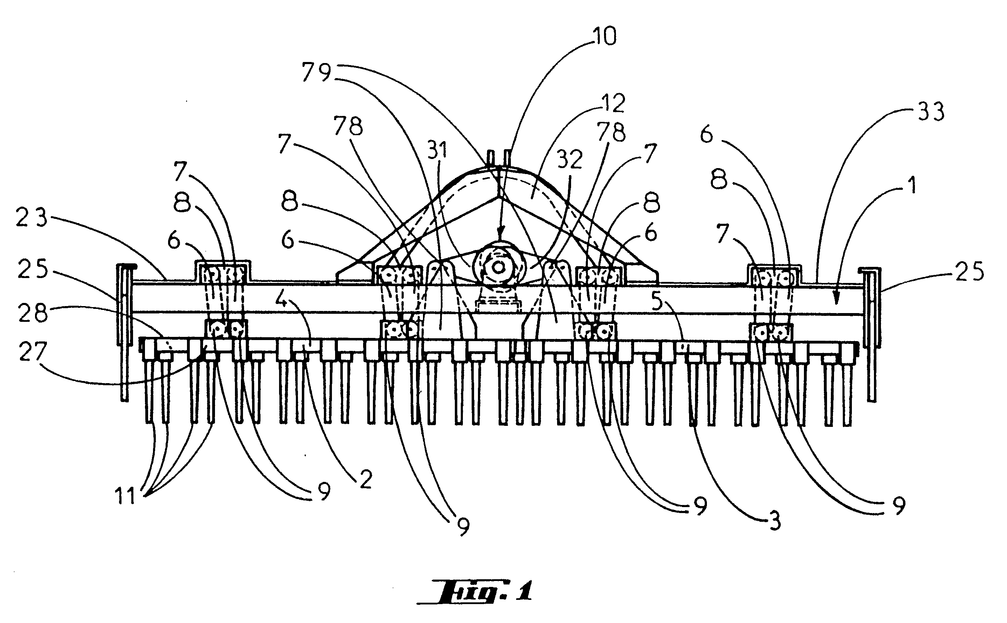

Sur la figure 1, on voit une machine de travail du sol selon la présente invention. Ladite machine est constituée d'un châssis (1) auquel sont liées des barres (2, 3, 4, 5) au moyen de bras oscillants (6, 7) articulés à l'une de leurs extrémités dans des chapes (8) sol idaires dudit châssis (1) et à l'autre de leurs extrémités dans des chapes (9) solidaires des barres (2, 3, 4, 5) respectives. Les bras oscillants (6, 7) seront décrits plus en détail ultérieurement.

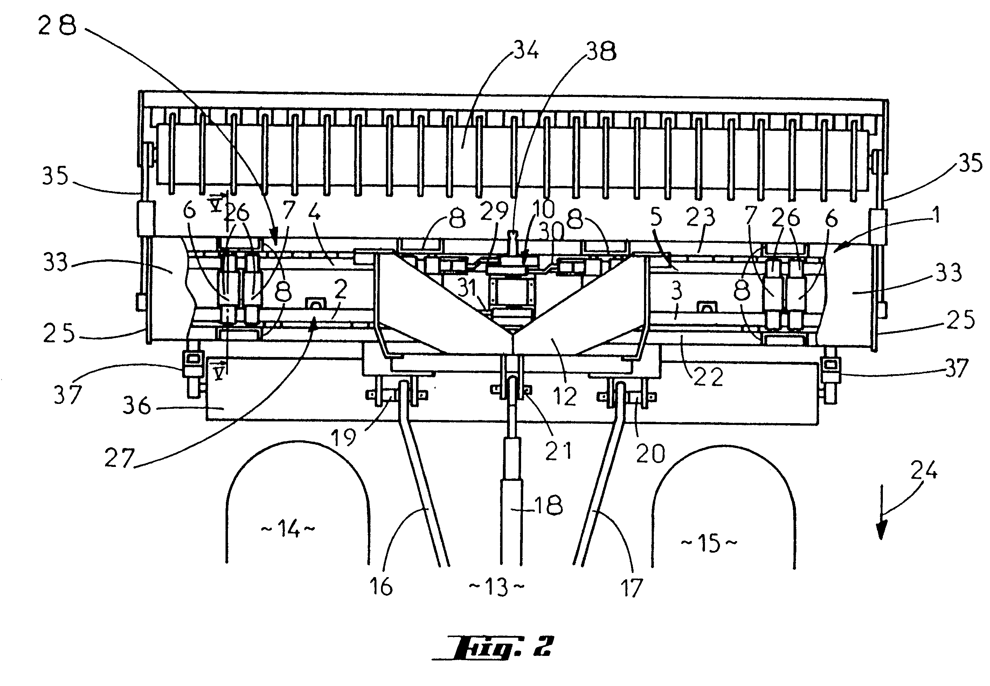

Ces barres (2, 3, 4, 5) sont animées d'un mouvement de va-et-vient alternatif transversalement à la direction d'avance (24) au travail (voir figures 2-5) par un dispositif à biel les-excentriques (10).

Le dispositif à bielles-excentriques (10) sera décrit plus en détail ultérieurement.

Chaque barre (2, 3, 4, 5) est munie d'un certain nombre d'outils de travail tels que par exemple des dents (11) fixées de manière démontable sur les barres (2, 3, 4, 5). Ces dents (11) sont dirigées à partir desdites barres (2, 3, 4, 5), du haut vers le bas.

Du reste, la machine est aussi équipée d'un dispositif d'attelage (12) permettant de la fixer par exemple au système d attelage trois points d'un véhicule tracteur (13) (représenté partiellement dans la figure 2).

Dans la figure 2, on voit les roues arrière (14, 15) du véhicule tracteur (13) et son système d'attelage à trois points, composé de façon connue de deux bras inférieurs (16, 17) et d'une bielle supérieure (18).

Le dispositif d'attelage (12) de la machine quant à lui comporte deux points d'attelage inférieurs (19, 20) destinés à être liés aux deux bras inférieurs (16, 17) et un point d'attelage supérieur (21) destiné à être lié à la bielle supérieure (18).

Dans cette vue, on remarque clairement que le châssis (1) est constitué de deux poutres (22, 23) sensiblement parallèles et s'étendant transversalement à la direction d'avance (24). A chacune de leurs extrémités, les deux poutres (22, 23) sont liées entre-elles par une plaque latérale (25) de manière à former un ensemble rigide.

Sur la face supérieure desdites poutres (22, 23) sont fixées les chapes (8) de telle sorte que les fixations supérieures (26) des bras oscillants (6, 7) s'étendent à un niveau supérieur à celui des poutres (22, 23).

A partir de ces fixations supérieures (26), les bras oscillants (6, 7) s'étendent vers le bas en traversant l'espace situé entre les deux poutres (22, 23) pour rejoindre leur barre à dents respective (2, 3, 4, 5).

On voit également dans cette figures la disposition des barres à dents (2, 3, 4, 5) en deux rangées (27, 28) transversalement à la direction d'avance (24) de la machine. Dans cet exemple, on voit que les rangées (27, 28) des barres à dents (2, 3, 4, 5), s'étendent sensiblement parallèlement entre-elles et sensiblement parallèlement aux poutres (22, 23) du châssis (1). On voit en sus que la distance entre les deux rangées (27, 28) mesurée dans la direction d'avance (24) est inférieure à la distance entre les deux poutres (22, 23) du châssis (1).

On voit aussi dans cette figure, le dispositif à bielles-excentriques (10) avec les bielles (29, 30, 31, 32) et on y remarque également que ledit dispositif à bielles-excentriques (10) ainsi que les bras oscillants (6, 7) s'étendent en vue de dessus dans l'espace délimité par les deux poutres (22, 23) format le châssis (1).

Sur ce châssis (1) est assujetti un capot (33) vu partiellement aux extrémités de la machine) afin de protéger l'utilisateur des organes en mouvement. Ladite machine de travail du sol représentée dans cette vue est équipée d'un rouleau de nivellement arrière (34) connu de l'homme de l'art. Ce rouleau est lié de manière articulée sur le châssis (1) de la machine à l'aide de bras (35) liés à leur extrémité frontale aux plaques (25) à l'aide d'une articulation d'axe dirigé transversalement à la direction d'avance (24) de la machine. La largeur du rouleau (34) est sensiblement égale à la largeur de travail des rangées (27, 28) de barres à dents (2, 3, 4, 5).

A l'avant de la machine s'étend un rouleau de soutien et de nivellement (36). Ce rouleau est lié au châssis (1) de la machine par un dispositif de liaison (37) permettant de régler la hauteur dudit rouleau (36) par rapport aux barres à dents (2, 3, 4, 5). La largeur de ce rouleau est au moins égale à la voie des roues arrière (14, 15) du véhicule tracteur (13).

On observe aussi un bout d'arbre (38) dépassant à l'arrière du dispositif à bielles-excentriques (10) qui est destiné à animer un dispositif accessoire additionnel à la machine mais non représenté.

Dans cet exemple de réalisation, on remarque aussi que les bras oscillants (6, 7) sont groupés par paires. Ces paires sont constituées d'un bras oscillant (6) et d'un bras oscillant (7) et dans chacune de ces paires les fixations supérieures (26) solidaires de leur bras oscillant respectif (6, 7) sont les plus proche possible l'une de l'autre.

De plus, toujours dans cet exemple les bras oscillants (6, 7) associés à une même barre à dents (2, 3, 4, 5) sont les plus loin possible l'un de l'autre.

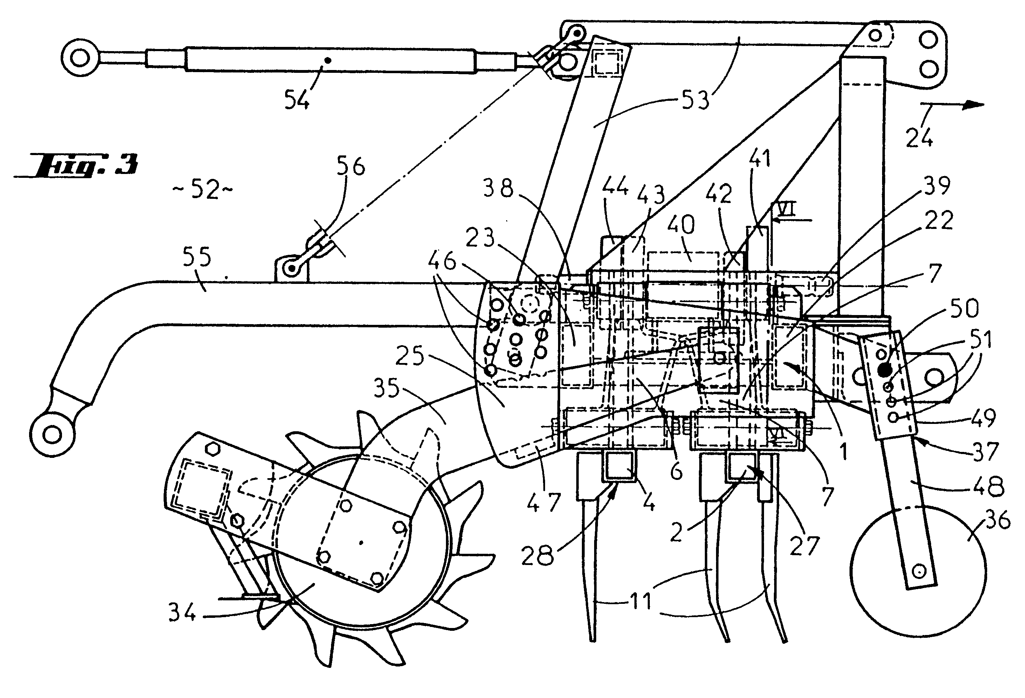

Sur la figure 3, on voit la machine de travail du sol des figures 1 et 2 selon l'invention, en vue de côté. On distingue sur cette figure l'arbre d'entrée (39) du dispositif (10) qui reçoit le mouvement de rotation du véhicule tracteur (13) (figure 2) à l'aide d'un arbre à joints universels non réprésenté. Cet arbre (39) est guidé en rotation par un palier (40) fixé sur le châssis (1).

A l'avant de ce palier (40), l'arbre d'entrée (39) supporte les excentriques (41, 42) associés aux barres à dents (3, 2) de la rangée frontale (27), tandis qu'à l'arrière dudit palier (40), l'arbre d'entrée (39) supporte les deux excentriques (43, 44) associés aux barres à dents (5, 4) de la rangée arrière (28). A l'arrière l'arbre d'entrée (39) se prolonge par le bout d'arbre (38) décrit plus haut. On retrouve dans cette vue les deux poutres (22, 23) formant le châssis (1) de ladite machine, de même qu'un bras oscillant (7) lié à une barre à dents (2 ou 3) de la rangée frontale (27) ainsi qu'un bras oscillant (6) lié à une barre à dents (4 ou 5) de la rangée arrière (28). Comme décrit précédemment, cette figure montre la manière selon laquelle les bras oscillants (6, 7) traversent l'espace s'étendant entre les deux poutres (22, 23) du châssis (1).

Sur les barres à dents (2, 3) de la rangée frontale (27), les dents (11) sont montées alternativement à l'avant et à l'arrière desdites barres à dents (2, 3). Par contre, sur les barres à dents (4, 5) de la rangée arrière (28), toutes les dents (11) sont montées à l'arrière desdites barres à dents (4, 5).

On retrouve dans cette vue le rouleau de nivellement arrière (34) ainsi que les bras (35) liant ce rouleau aux plaques latérales (25) du châssis (1). Sur la partie arrière haute des plaques latérales (25) du châssis (1) sont aménagés un certain nombre de trous (46) tandis qu'à leur partie arrière basse est amménagée une butée (47).

Ladite machine de travail du sol y est aussi représentée équipée du rouleau frontal (36). Le dispositif de liaison (37) du rouleau frontal (36) sur le châssis (1) de la machine est constitué par un bras (48) s'étendant à chaque extrémité du rouleau (36) et d'un fourreau (49) respectif, solidaire dudit châssis (1). Le rouleau (36) est guidé en rotation à l'extrémité inférieure desdits bras (48). L'extrémité supérieure desdits bras (48) est introduite dans son fourreau (49) respectif et y est maintenue axialement au moyen d'une broche (50) collaborant avec un des trous (51) dudit fourreau (49).

Dans cette vue, on a en sus représenté un attelage arrière (52) permettant l'adjonction d'un dispositif accessoire à l'arrière de ladite machine. Cet attelage arrière est constitué d'une part d'un cadre (53) monté de façon rigide sur la machine de travail du sol et d'autre part d'une bielle (54) fixée de manière articulée sur la partie supérieure de ce cadre (53) et de deux bras inférieurs (55) également fixés de manière articulée sur le cadre (53). Le débattement de ces bras inférieurs (55) est limité vers le bas au moyen d'une chaîne (56), fixée aux bras inférieurs (55) et au cadre (53).

A leur partie arrière, la bielle (54) et les bras inférieurs (55) forment ainsi un système d'attelage à trois points.

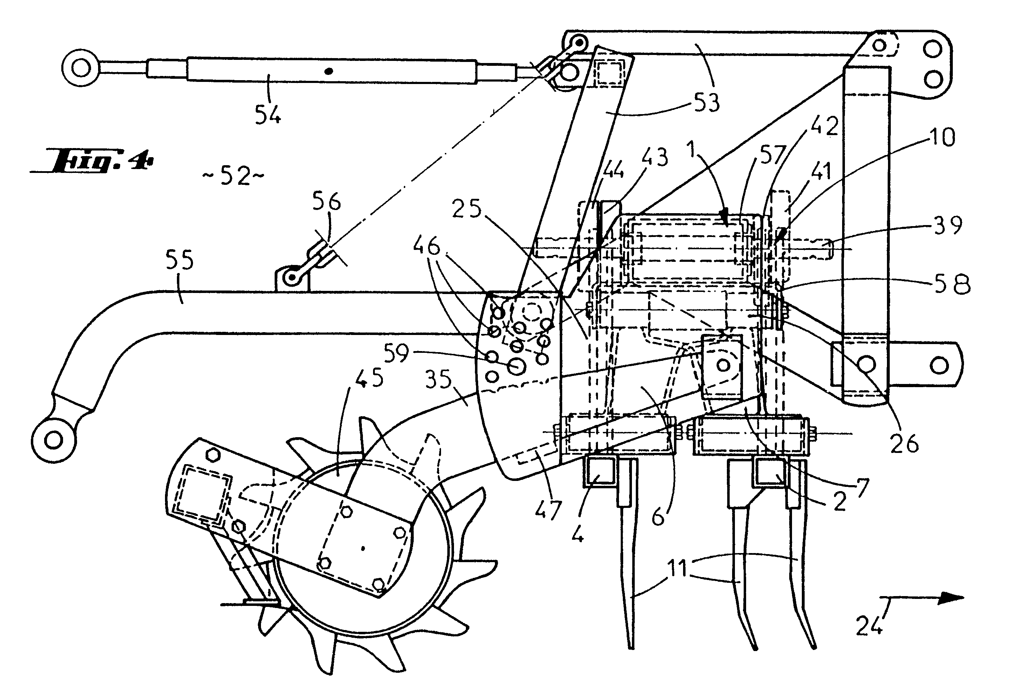

Sur la figure 4, distinctivement de la figure 3, on peut voir que le châssis (1) de la machine de travail du sol est constitué d'une seule poutre (57) située au-dessus des fixations supérieures (26) des bras oscillants (6, 7). Les chapes (58) servant à lier les fixations supérieures (26) des bras oscillants (6, 7) au châssis (1), sont fixées sur la face inférieure de ladite poutre (57) et sont ouvertes vers le bas.

Dans cette vue, les dents (11) des barres à dents arrière (4, 5) sont montées à l'avant desdites barres à dents (4, 5). On note toutefois que la distance séparant les dents (11) arrière des barres à dents frontales (2, 3) et les dents (11) des barres à dents arrière (4, 5) reste sensiblement la même que dans l'exemple des figures 1 à 3. La poutre (57) sert également de palier à l'arbre d'entrée (30) dudit dispositif à bielles-excentriques (10). A l'avant de la poutre (57) sont fixés sur l'arbre d'entrée (39), les excentriques (41, 42) associés aux barres à dents frontales (3, 2) tandis qu'à l'arrière de ladite poutre (57) s'étendent les excentriques (43, 44) associés aux barres à dents arrière (5, 4).

Dans cet exemple de réalisation, il n'est pas prévu de rouleau frontal de soutien et de nivellement, la profondeur de travail des dents (11) de cette machine étant déterminée par le rouleau arrière (45) qui remplit aussi une fonction de soutien. A cet effet, la poutre (57) comporte à chacune de ses extrémités une plaque latérale (25). Tout comme dans l'exemple précédent, le rouleau arrière (45) est lié de manière articulée aux plaques latérales (25) au moyen de deux bras (35). Ces plaques latérales (25) comportent comme décrit précédemment, dans leur partie arrière supérieure des trous (46) et dans leur partie inférieure une butée (47). Une broche (59) enfoncée dans un des trous (46) de chaque plaque latérale (25), coopère avec le bras (35) respectif du rouleau (45) pour limiter le débattement de celui-ci vers le haut.

Tous les éléments de la machine de la figure 4 communs à la machine représentée dans les figures 1 à 3 n'ont pas été redécrits.

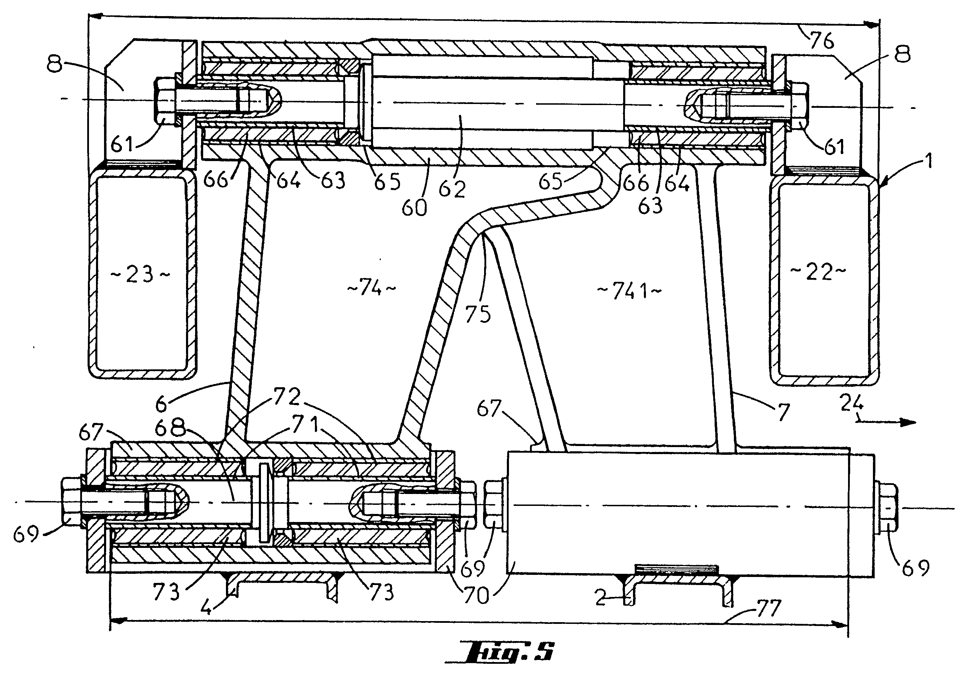

Sur la figure 5, on voit totalement en coupe un des bras oscillants (6) lié à une barre à dents arrière (4, 5) et en arrière-plan partiellement occulté un des bras oscillants (7) lié à une des barres à dents avant (2, 3). On remarque sur cette figure que la fixation supérieure des bras oscillants (6, 7) (ici celle du bras oscillant (6)) occupe sensiblement toute la place disponible entre les deux poutres (22, 23) du châssis (1). On voit également que les chapes (8) sont situées au-dessus des poutres (22, 23). Ceci permet notamment d'économiser en hauteur l'encombrement de ces poutres (22, 23).

La fixation supérieure du bras oscillant (6) est constituée d'une part d'un organe tubulaire (60) solidaire du bras oscillant (6), monté concentriquement à un axe (62). Cet axe (62) est lié par des moyens de fixation (61) aux demi-chapes constituant la chape (8) solidaire du châssis (1).

Ledit axe (62) est lié à l'organe tubulaire (60) par un dispositif élastique à chacune de ses extrémités. Chaque dispositif élastique est constitué d'un tube intérieur (63), monté serré sur l'axe intérieur (62) et d'un tube extérieur (64) monté serré dans un des alésages (65) pratiqués à cet effet à chaque extrémité de l'organe tubulaire (60). Le tube intérieur (63) est lié au tube extérieur (64) par un cylindre élastique (66). Ce dispositif élastique permet une certaine rotation du bras oscillant (6) autour de l'axe (62).

De même, la fixation inférieure du bras oscillant (6) est constituée d'une part d'un organe tubulaire (67) lié au bras oscillant (6) et monté concentriquement à un axe (68). L'axe (68) est lié par des moyens de liaison (69) à une chape (9) solidaire d'une barre à dents (4, 5). Ledit axe (68) est lié à l'organe tubulaire (67) par un dispositif élastique à chacune de ses extrémités. Lesdits dispositifs élastiques sont respectivement constitués d'un tube intérieur (71) monté serré sur l'axe (68) et d'un tube extérieur (72) monté serré dans l'organe tubulaire (67). Chaque tube intérieur (71) est lié à son tube extérieur respectif (72) par un cylindre élastique (73) autorisant également une certaine rotation du bras oscillant (6) autour de l'axe (68).

Bien que cela ne soit pas représenté, on comprendra que les fixations supérieure et inférieure d'un bras oscillant (7) sont identiques à celles d'un bras oscillant (6).

Dans cette vue, on voit aussi clairement la forme des bras oscillants (6, 7). Un bras oscillant arrière (6) a son organe tubulaire inférieur (67) déporté vers l'arrière par rapport à son organe tubulaire supérieur (60) afin de pouvoir être lié à une des barres à dents arrière (4, 5). A cet effet, l'organe tubulaire supérieur (60) et l'organe tubulaire inférieur (67) d'un même bras oscillant arrière (6) sont liés entre eux par une âme (74) s'étendant vers l'arrière et vers le bas. En sus, on voit que cette âme (74) est plus large dans sa partie supérieure que dans sa partie inférieure. On voit également que la liaison de l'âme (74) sur l'organe tubulaire supérieur (60) est sensiblement centrée par rapport audit organe tubulaire supérieur (60). Un bras oscillant avant (7) par contre destiné à être lié à une barre à dents avant (2, 3), a son organe tubulaire inférieur (67) déporté vers l'avant par rapport à son organe tubulaire supérieur (60) afin de pouvoir être lié à une des barres à dents avant (2, 3). A cet effet, l'organe tubulaire supérieur (60) et l'organe tubulaire inférieur (67) d'un même bras oscillant (7), sont liés entre eux par une âme (741) s'étendant vers l'avant et vers le bas. Dans sa partie supérieure l'âme (741) est également plus large que dans sa partie inférieure. De même la liaison de l'âme (741) à l'organe tubulaire supérieur (60) est également sensiblement centrée par rapport au dit organe tubulaire supérieur (60).

De plus sur cette figure, on peut voir que les âmes (74, 741) des bras oscillants (6, 7) apparaissent comme sécantes. Afin de diminuer au maximum les risques de coïncement de pierres ou autres corps durs entre deux bras oscillants (6, 7) situés côte-à-côte, le point d'intersection (75) est situé le plus haut possible par rapport aux barres à dents (2, 3, 4, 5).

On voit encore sur la figure 5 que la largeur (76) mesurée dans la direction d'avance (24) entre les deux poutres (22, 23) du châssis (1) est sensiblement égale à la distance (77) mesurée dans la direction d'avance (24) entre les extrémités extérieures des organes tubulaires inférieurs (67) des bras oscillants (6, 7).

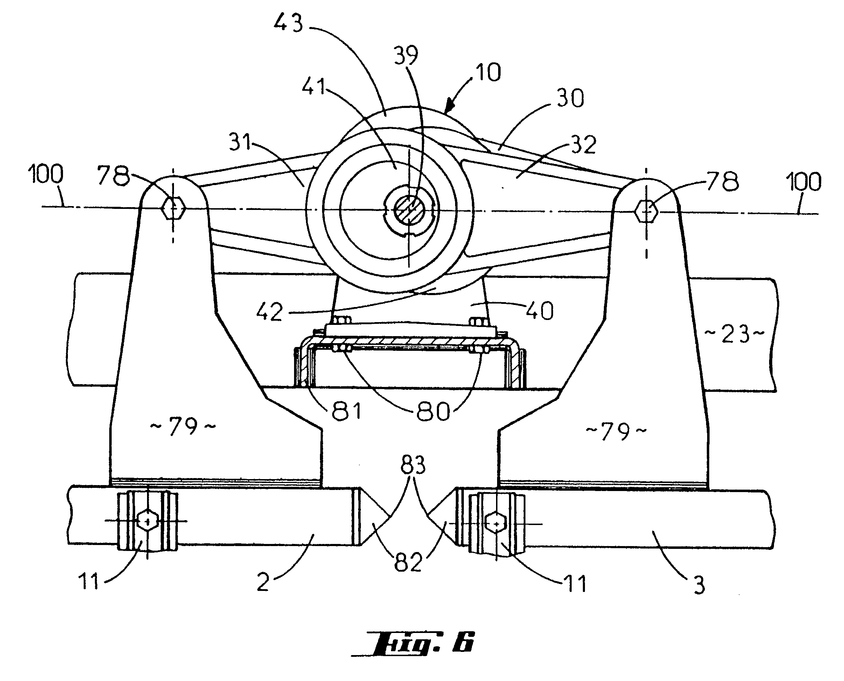

Sur la figure 6, on voit de face en gros plan le dispositif à bielles excentriques (10) qui anime les barres à dents (3, 2, 5, 4). Comme dit plus haut, le mouvement rotatif de la prise de force du véhicule tracteur (13) (figure 2) est transmis par un arbre de transmission à joints universels non représenté, à l'arbre d'entrée (39). Sur cet arbre d'entrée (39) sont montés les excentriques (41, 42, 43, 44). Ces excentriques (41, 42, 43, 44) coopèrent respectivement avec des bielles (32, 31, 30, 29) afin de transformer le mouvement de rotation de l'arbre d'entrée (39) en un mouvement de va-et-vient alternatif transmis par le pied de ces bielles (32, 31, 30, 29) à leur barre à dents respective (3, 2, 5, 4). Les pieds de ces bielles (32, 31, 30, 29) sont fixés comme il est montré dans cette figure 6 par des articulations (78) à des chapes (79), elles-mêmes solidaires de leur barre à dents (3, 2, 5, 4) respective. Ces bielles (32, 31, 30, 29) présentent un plan de symétrie (100) contenant l'axe de leur articulation (78) correspondante. Les chapes (79) s'étendent à l'extrémité intérieure des barres à dents (3, 2, 5, 4) desquelles elles sont solidaires.

Pour une bonne transmission du mouvement d'entrainement des barres à dents (3, 2, 5, 4), les articulations (7 8) des bielles (32, 31, 30, 29) sur les chapes (79) correspondantes, sont situées à une certaine hauteur par rapport aux barres à dents (3, 2, 5, 4). La hauteur des articulations (78) est telle que la projection de l'axe de rotation de l'arbre (39) sur le plan de la figure 6, et les projections des axes de rotation d'une articulation (78) de gauche et d'une articulation (78) de droite sur le même plan de la figure 6, sont sensiblement alignées sur une même droite sensiblement horizontale lorsque les bielles (32, 31, 30, 29) des articulations (78) gauche et droite considérées sont au point mort de leur mouvement.

Cet agencement permet d'équilibrer intrinsèquement au dispositif bielles-excentriques la partie des bielles (32, 31, 30, 29) considérée comme ayant un mouvement alternatif.

De plus, en observant simultanément les figures 2 et 6, on remarque que les excentriques (41, 42, 43, 44) sont répartis de façon équilibrée sur les 360 degrés de la rotation de l'arbre (39). C'est-à-dire que si on prend l'excentrique (41) comme référence, l'excentrique (43) en est déphasé de 90 degrés; l'excentrique (42) est déphasé également de 90 degrés par rapport a l'excentrique (43) donc son déphasage par rapport à (41) est de 180 degrés. Les deux excentriques voisins (41, 42) sont donc en opposition de phase. Leur déséquilibre propre s'annule donc vis-à-vis de l'ensemble du dispositif. Il en va de même pour la paire d'excentriques (43, 44) car l'excentrique (44) est déphasé de 90 degrés par rapport à l'excentrique (42) qui comme dit plus haut a lui-même un déphasage de 90 degrés par rapport à l'excentrique (43).

Cet agencement, en plus de la réalisation de l'équilibrage dynamique et statique des masses rotatives constituées par les excentriques (41, 42, 43, 44) et la partie des bielles (32, 31, 30, 29) considérée comme ayant un mouvement de rotation, permet d'obtenir une plus grande régularité du couple à transmettre à la machine pour son animation.

Le dispositif constitué par l'arbre d'entrée (39) et les excentriques (41, 42, 43, 44) est soutenu par le palier (40). Ce palier est lié par des moyens de fixation (80) à une traverse (81) s'étendant entre les deux poutres (22, 23) du châssis (1), parallèlement à la direction d'avance (24). Cette traverse (81) contribue également à la rigidité du châssis (1). On voit aussi dans la figure 6 que l'extrémité (82) de chaque barre à dents (2, 3, 4, 5) a une forme apte à collaborer avec celle en vis-à-vis sur la carre à dents adjacente de la même rangée (27, 28) afin de repousser, dans toutes les directions, les objets qui se trouvent entre les extrémités (82) quand elles se rapprochent l'une de l'autre. Tel que cela est représenté, les formes des extrémités (82) en vis-à-vis ont chacune un sommet (83) en vue du dégagement des pierres se trouvant entre deux barres à dents (2, 3, 4, 5). Avantageusement, la forme de l'extrémité (82) d'une barre à dents (2, 3, 4, 5) est conique. Les machines de travail du sol selon la présente invention et telles qu'elles sont décrites dans les figures 1, 2, 3, 4, 5 et 6, fonctionnent comme décrit ci-après.

La machine de travail du sol est fixée au véhicule tracteur (13) par le dispositif d'attelage (12) solidaire du châssis (1) qui se trouve être l'ossature de la machine. A ce châssis (1) sont suspendues, par les bras oscillants (6, 7), les barres à dents (2, 3, 4, 5) transversalement à la direction d'avance (24) au travail.

Les bras oscillants (6,7) étant fixés d'une part au châssis (1) et d'autre part aux barres à dents (2, 3, 4, 5) par des articulations cylindriques élastiques (63, 64, 66 ; 71, 72, 73), lesdites barres à dents (2, 3, 4, 5) peuvent donc avoir un mouvement pendulaire de faible amplitude de part et d'autre de leur position d'équilibre.

A l'avant de la machine, se trouve l'arbre d'entrée (39) qui est lié à la prise de force du véhicule tracteur (13) par l'intermédiaire d'un arbre à joints universels transmettant le mouvement de rotation de cette prise de force à l'arbre d'entrée (39).

Sur cet arbre d'entrée (39) sont montés les excentriques (41, 42, 43, 44). L'ensemble arbre d'entrée (39)-excentriques (41, 42, 43, 44) forme un dispositif similaire à un vilbrequin. Sur chacun de ces excentriques (41, 42, 43, 44) sont montées par leur tête les bielles (32, 31, 30, 29), leur pied étant articulé respectivement sur les chapes (79) solidaires des barres à dents (3, 2, 5, 4). Le dispositif à bielles-excentriques (10) ainsi créé transforme le mouvement de rotation reçu par l'arbre d'entrée (39) en mouvement de va-et-vient alternatif transmis par les pieds des bielles (32, 31, 30, 29) respectivement aux barres à dents (3, 2, 5, 4).

Sur les barres à dents (3, 2, 5, 4) sont montées des dents (11) pénétrant dans le sol par leur extrémité inférieure et qui par leur mouvement de va-et-vient alternatif transversal à la direction d'avance (24) travaillent le sol et brisent les mottes de terre s'y trouvant.

Le rouleau de soutien avant (36) est réglable en hauteur grâce à son dispositif de liaison (37). Ce réglage permet de contrôler la pénétration des dents (11) dans le sol et ainsi d'avoir la profondeur de travail que l'on souhaite. Ce rouleau de soutien (36) en roulant sur le sol a aussi de par sa largeur, un second rôle qui est d'égaliser le sol avant le passage de la machine, en éliminant les traces des roues (14, 15) que le véhicule tracteur (13) laisse derière lui.

Le rouleau de nivellement (34) de par ses bras de liaison (35) flottant en hauteur, reste donc toujours au niveau du sol et son rôle est de retasser la terre et de l'égaliser après le travail des dents (11) en roulant sur le sol.

Par contre, la machine de travail du sol décrite à la figure 4 n'a pas de rouleau de soutien avant (36). En effet, c'est le rouleau de nivellement arrière (45) qui, en plus de son rôle de nivellement comparable à celui du rouleau (34) décrit ci-dessus, a un rôle de soutien de la machine et de contrôle de la profondeur de travail des dents (11).

Dans cette configuration, le rouleau (45) peut soutenir la machine de travail du sol car ses deux bras (35), lorsque la machine pénètre dans le sol, arrivent chacun en butée vers le haut sur la broche (59) placée dans un des trous (46) en fonction de la profondeur de travail que l'on désire.

## Revendications

1. Machine de travail du sol comportant d'une part un châssis (1) muni d'un dispositif d'attelage (12) à un véhicule moteur (13), châssis (1) auquel est liée par une pluralité de bras oscillants (7 ; 6) au moins une rangée (27 ; 28) d'au moins deux barres (2, 3 ; 4, 5) munies d'outils (11), lesdites barres (2, 3 ; 4, 5) étant au moins sensiblement alignées et à mouvements opposés, et d'autre part un mécanisme de transformation du mouvement rotatif reçu d'une source motrice en un mouvement de va-et-vient transversal à la direction d'avance (24) au travail, comportant un dispositif à bielles-excentriques (10), chaque bielle (31, 32 ; 29, 30) servant à transmettre le mouvement de va-et-vient à la barre (2, 3 ; 4, 5) correspondante à laquelle elle est liée directement ou indirectement par une de ses extrémités, caractérisée par le fait que les deux extrémités (82) de deux barres (2, 3 ; ou 4, 5) adjacentes d'une même rangée (27 ; 28), en regard l'une de l'autre, présentent chacune un sommet (83), le sommet (83) de l'une des barres (2 ou 3 ; ou 4 ou 5) étant dirigé vers l'extrémité (82) de l'autre barre (3 ou 2 ; ou 5 ou 4).

2. Machine de travail du sol selon la revendication 1, caractérisée par le fait que le sommet (83) de l'une des barres (2 ou 3 ; ou 4 ou 5) est dirigé vers le sommet (83) de l'autre barre (3 ou 2 ; ou 5 ou 4).

3. Machine de travail du sol selon la revendication 1 ou 2, caractérisée par le fait que ladite extrémité (82) d'une barre (2 ou 3 ; ou 4 ou 5) présente une forme conique.

## Claims

1. A soil cultivation machine comprising on the one hand a chassis (1) equipped with a device (12) for coupling to a motor vehicle (13), chassis (1) to which is connected, by a plurality of oscillating arms (7; 6), at least one row (27; 28) of at least two bars (2, 3; 4, 5) equipped with tools (11), said bars (2, 3; 4, 5) being at least substantially aligned and having opposed movement, and comprising on the other hand a mechanism for transforming the rotary movement received from a power source into a reciprocating movement transverse to the direction of advance (24) during work, comprising an eccentric rod device (10), where each rod (31, 32; 29, 30) serves to transmit the reciprocating movement to the corresponding bar (2, 3; 4, 5) to which it is connected directly or indirectly by one of its ends, characterised in that the two ends (82) of two adjacent bars (2, 3 ; or 4, 5) of one and the same row (27; 28) arranged opposite one another each comprise a tip (83), where the tip (83) of one of the bars (2 or 3; or 4 or 5) is directed towards the end (82) of the other bar (3 or 2; or 5 or 4).

2. A soil cultivation machine as claimed in Claim 1, characterised in that the tip (83) of one of the bars (2 or 3; or 4 or 5) is directed towards the tip (83) of the other bar (3 or 2; or 5 or 4).

3. A soil cultivation machine as claimed in Claim 1 or 2, characterised in that the said end (82) of a bar (2 or 3; or 4 or 5) is of a conical shape.

## Patentansprüche

1. Bodenbearbeitungsmaschine, die einerseits einen Rahmen (1), der mit einer Vorrichtung (12) zum Anbau an ein Motorfahrzeug (13) versehen ist, mit welchem Rahmen (1) über mehrere pendelnde Arme (7, 6) zumindest eine Reihe (27; 28) von zwei mit Werkzeugen (11) versehenen Stangen (2, 3; 4, 5), welche Stangen (2, 3; 4, 5) zumindest im wesentlichen in einer Reihe stehen und sich entgegengesetzt bewegen, verbunden ist, und anderseits einen Mechanismus zur Umwandlung der von einem Antriebsquelle empfangenen Drehbewegung in eine quer zur Fortbewegungsrichtung (24) im Betrieb pendelnde Bewegung aufweist, umfassend eine Einrichtung mit Exzentergliedern (10), wobei jedes Glied (31, 32; 29, 30) dazu dient, die pendelnde Bewegung auf die entsprechende Stange (2. 3; 4, 5), mit der es direkt oder indirekt über eines seiner Enden verbunden ist, zu übertragen, dadurch gekennzeichnet, daß die beiden Enden (82) der beiden Stangen (2, 3; oder 4, 5), die ein und derselben Reihe (27; 28) benachbart sind, einander gegenüber jeweils einen Scheitel (83) aufweisen, wobei der Scheitel (83) einer der Stangen (2 oder 3; oder 4 oder 5) zum Ende (82) der anderen Stange (3 oder 2; oder 5 oder 4) gerichtet ist.

2. Bodenbearbeitungsmaschine nach Anspruch 1, dadurch gekennzeichnet, daß der Scheitel (83) der einen Stange (2 oder 3; oder 4 oder 5) zum Scheitel (83) der anderen Stange (3 oder 2; oder 5 oder 4) gerichtet ist.

3. Bodenbearbeitungsmaschine nach Anspruch 1 oder 2, dadurch gekennzeichnet, daß das Ende (82) der einen Stange (2 oder 3; oder 4 oder 5) eine konische Form aufweist.

**Fig. 1**

**Fig. 2**

EP 0 266 292 B1

Fig. 3

**Fig. 4**

Fig. 5

EP 0 266 292 B1

**Fig. 6**

EP 0 266 292 B1